# EUROPÄISCHE PATENTSCHRIFT

(11) **EP 2 651 726 B1**
(45) Veröffentlichungstag und Bekanntmachung des Hinweises auf die Patenterteilung: **12.08.2015**
(21) Anmeldenummer: 12791772.2
(22) Anmeldetag: 28.11.2012
(51) Int. Cl.: B60T 10/02, F16D 57/04

(54) **KRAFTFAHRZEUGANTRIEBSSTRANG MIT EINEM ABKOPPELBAREN HYDRODYNAMISCHEN RETARDER UND STEUERUNGSVERFAHREN HIERFÜR**
VEHICLE DRIVE TRAIN WITH DECONNECTABLE HYDRODYNAMIC RETARDER AND CONTROL METHOD THEREFOR
TRANSMISSION DE VÉHICULE AVEC RETARDATEUR HYDRODYNAMIQUE DÉSACCOUPLABLE ET PROCÉDÉ DE CONTRÔLE D'UNE TELLE TRANSMISSION

(30) Priorität: 09.12.2011 DE 102011120644
(43) Veröffentlichungstag der Anmeldung: 23.10.2013
(73) Patentinhaber: Voith Patent GmbH, 89522 Heidenheim (DE)
(72) Erfinder: MENNE, Achim, 74564 Crailsheim (DE); HUTH, Tilman, 74589 Satteldorf (DE); LAUKEMANN, Dieter, 74564 Crailsheim (DE); KLEMENT, Werner, 89520 Heidenheim (DE); BECKE, Martin, 89075 Ulm (DE); KOCH, Werner, 73326 Deggingen (DE)
(74) Vertreter: Dr. Weitzel & Partner
(86) Internationale Anmeldenummer: PCT/EP2012/073830
(87) Internationale Veröffentlichungsnummer: WO 2013/083458

(56) Entgegenhaltungen:
- DE-A1- 4 445 024
- DE-A1- 19 927 397
- DE-A1-102005 052 121
- GB-A- 1 272 020

## Beschreibung

Die vorliegende Erfindung betrifft einen Kraftfahrzeugantriebsstrang mit einem mittels einer Trennkupplung mechanisch vom Antriebsstrang abkoppelbaren hydrodynamischen Retarder sowie ein Steuerungsverfahren hierfür.

Hydrodynamische Retarder werden seit vielen Jahren als verschleißfreie Dauerbremsen in Kraftfahrzeugen sowohl auf der Schiene als auch auf der Straße, letzteres insbesondere in Lastkraftwagen, eingesetzt. Obwohl solche verschleißfreien Dauerbremsen bezüglich der Sicherheit beim Bremsen des Fahrzeugs und bezüglich eines geringeren Verschleißes der reibend arbeitenden Betriebsbremsen unbestritten erhebliche Vorteile mit sich bringen, sind die Leerlaufverluste im Nichtbremsbetrieb des hydrodynamischen Retarders ein Kritikpunkt. So konnten diese Leerlaufverluste zwar durch Vorsehen von sogenannten Ventilationsblenden oder durch Vorsehen eines im Nichtbremsbetrieb vom Stator (Sekundärrad) abfahrenden Rotors (Primärrad) reduziert werden, besonders die letztere Maßnahme reicht dabei jedoch in der Regel nicht aus, um die Leerlaufverluste auf nahezu Null abzusenken.

Eine Möglichkeit, die Leerlaufverluste eines solchen hydrodynamischen Retarders auf Null abzusenken, besteht darin, den hydrodynamischen Retarder mittels einer Trennkupplung vom Antriebsstrang abkoppelbar zu gestalten. Hierbei ergeben sich jedoch die folgenden Nachteile: Zum einen addiert sich die Zeit zum Schließen der Trennkupplung auf die Zeit zum Befüllen des hydrodynamischen Retarders auf, was die Ansprechzeit zwischen der Aktivierungsanforderung für den hydrodynamischen Retarder und dem Zurverfügungstellen des geforderten Bremsmomentes durch den hydrodynamischen Retarder verlängert. Zum anderen kann die Trennkupplung, die insbesondere als Reibkupplung ausgebildet ist, durch die hohen Belastungen, insbesondere beim Einschalten des hydrodynamischen Retarders, zu einem frühzeitigeren Servicebedarf oder Austausch von Komponenten im Vergleich zu Antriebssträngen mit hydrodynamischen Retardern, die ohne Trennkupplung am Antriebsstrang angebunden sind, führen.

Die europäische Patentschrift EP 2 024 209 B1 schlägt zur Verkürzung der Ansprechzeit eines über eine Trennkupplung am Antriebsstrang angeschlossenen hydrodynamischen Retarders vor, die Trennkupplung immer dann, wenn kein Traktionsbetrieb des Kraftfahrzeugs vorliegt, präventiv zu schließen und den Retarder im entleerten Zustand anzukoppeln.

Die Offenlegungsschrift DE 199 27 397 A1 schlägt eine selbstverstärkende Reibkupplung zum Ankoppeln des hydrodynamischen Retarders vor, die ein Ankoppeln des hydrodynamischen Retarders auch im befüllten Zustand ermöglicht.

Die Offenlegungsschrift DE 10 2005 052 121 A1 schlägt ein Ausschalten eines hydrodynamischen Retarders durch Entleeren seines Arbeitsraumes und gleichzeitiges Loslassen des Stators, sodass dieser mit dem Rotor trudeln kann, vor.

Die Offenlegungsschrift DE 10 2009 001 146 A1 schlägt eine koaxiale Anordnung des Rotors des Retarders und des Rotors einer elektrischen Maschine vor, die gemeinsam über eine Trennkupplung, insbesondere unsynchronisierte Trennkupplung, vom Antriebsstrang abschaltbar sind.

Der vorliegenden Erfindung liegt die Aufgabe zugrunde, einen Kraftfahrzeugantriebsstrang mit einem mittels einer Trennkupplung mechanisch vom Antriebsstrang abkoppelbaren hydrodynamischen Retarder sowie ein Steuerungsverfahren hierfür anzugeben, mit welchen die oben dargestellten Nachteile reduziert oder vermieden werden können. Die erfindungsgemäße Lösung soll sich durch eine einfache konstruktive und kostengünstige Bereitstellung auszeichnen.

Die erfindungsgemäße Aufgabe wird durch einen Kraftfahrzeugantriebsstrang mit den Merkmalen von Anspruch 1 sowie ein Verfahren zum Steuern eines Kraftfahrzeugantriebsstranges mit den Merkmalen von Anspruch 7 gelöst. Die abhängigen Ansprüche beschreiben vorteilhafte und besonders zweckmäßige Ausgestaltungen der Erfindung.

Ein erfindungsgemäßer Kraftfahrzeugantriebsstrang weist einen hydrodynamischen Retarder auf. Der hydrodynamische Retarder umfasst ein umlaufendes beschaufeltes Primärrad und ein stationäres Sekundärrad (Stator) oder in Gegenrichtung zum Primärrad umlaufendes beschaufeltes Sekundärrad (Gegenlaufretarder), die gemeinsam einen mit Arbeitsmedium befüllbaren Arbeitsraum ausbilden. Zum Einschalten des Retarders wird der Arbeitsraum mit Arbeitsmedium befüllt, wobei die im Arbeitsraum befindliche Arbeitsmediummenge, die eine hydrodynamische Kreislaufströmung im Arbeitsraum ausbildet, das vom Primärrad auf das Sekundärrad übertragene Moment und damit das Bremsmoment bestimmt. In der Regel ist der Retarder in verschiedenen Bremsstufen einschaltbar.

Der hydrodynamische Retarder ist mittels einer Trennkupplung mechanisch vom Antriebsstrang abkoppelbar. Die Trennkupplung ist insbesondere als nass- oder trockenlaufende Reibkupplung, beispielsweise als Lamellenkupplung ausgeführt. Die Trennkupplung kann eine Überbrückungsschaltung aufweisen, welche die Primärseite und die Sekundärseite der Kupplung nach der Synchronisierung miteinander verriegelt, insbesondere formschlüssig beziehungsweise einander hintergreifend, um das übertragbare Moment zu erhöhen. Gemäß einer Ausführungsform ist die Trennkupplung derart dimensioniert, dass sie im reibenden Zustand eine maximale Momentenübertragungsfähigkeit aufweist, die unterhalb derjenigen des zu einem gewissen Ausmaß befüllten oder vollbefüllten hydrodynamischen Retarders liegt.

Unter Trennkupplung ist vorliegend jedes Bauteil zu verstehen, das in einem ersten Betriebszustand eine Leistungsübertragung, insbesondere mechanische Leistungsübertragung herstellt und in einem zweiten Betriebszustand unterbricht, somit beispielsweise Synchronelemente, Reibkupplungen und anderes.

Erfindungsgemäß ist eine Füllstandsüberwachungseinrichtung vorgesehen, welche den aktuellen Füllstand des Arbeitsmediums im Arbeitsraum erfasst. Die Erfassung kann dabei unmittelbar im Arbeitsraum erfolgen oder auch außerhalb desselben indirekt. Beispielsweise kann die Füllstandserfassung in einem Nebenraum des hydrodynamischen Retarders erfolgen, der mit Arbeitsmedium in Abhängigkeit des Füllstands im Arbeitsraum mehr oder minder befüllt ist und der vorliegend in Anlehnung an des Prinzip der kommunizierenden Gefäße als kommunizierender Nebenraum des Retarders bezeichnet wird.

Die Füllstandserfassung kann quantitativ oder qualitativ erfolgen. Bei einer quantitativen Füllstandserfassung wird lediglich festgestellt, ob sich überhaupt Arbeitsmedium in dem Arbeitsraum des Retarders befindet oder ob dieser entleert ist. Bei einer qualitativen Erfassung wird der konkrete Füllstand stufenlos oder in verschiedenen Stufen erfasst. Die Erfassung kann ferner kontinuierlich oder in Intervallen erfolgen.

Erfindungsgemäß ist eine Trennkupplungssperreinrichtung vorgesehen, die mit der Füllstandsüberwachungseinrichtung in kommunikativer oder mechanischer Wirkverbindung steht und ein Schließen der Trennkupplung in Abhängigkeit des erfassten Füllstands sperrt. Eine solche Trennkupplungssperreinrichtung kann sowohl als rein elektronische Steuervorrichtung ausgeführt sein, die ein entsprechendes Schließ- und/oder Sperrsignal zum Zulassen des Schließens oder zum Sperren des Schließens der Trennkupplung ausgibt. Alternativ kann die Trennkupplungssperreinrichtung auch als physikalisch oder mechanisch arbeitender Mechanismus ausgeführt sein. Auch Mischformen sind denkbar. Gemäß einer vorteilhaften Ausführungsform weist die Füllstandsüberwachungseinrichtung einen im Arbeitsraum des Retarders oder einen in einem mit dem Arbeitsraum bezüglich des Füllstands mit Arbeitsmedium kommunizierenden Nebenraum des Retarders angeordneten Schwimmer auf.

Zusätzlich oder alternativ kann die Füllstandsüberwachungseinrichtung einen elektrischen, optischen oder akustischen Sensor und eine zugeordnete Auswerteeinheit umfassen, mittels welchen der Füllstand des Arbeitsraums oder eines bezüglich des Füllstands mit Arbeitsmedium kommunizierenden Nebenraumes des Retarders durch elektrische Widerstandsmessung, optische Signalmessung oder akustische Signalmessung erfasst wird.

Günstig ist es, wenn der Füllstandsüberwachungseinrichtung oder der Trennkupplungssperreinrichtung eine Steuervorrichtung zugeordnet oder in diese integriert ist, welche als Eingangsgröße die aktuelle Drehzahl der dem Retarder abgewandten Primärseite der Trennkupplung unmittelbar oder mittelbar erfasst, empfängt oder berechnet, und ein Schließen der Trennkupplung zusätzlich in Abhängigkeit der Drehzahl steuert.

Die Steuervorrichtung kann beispielsweise eine füllstandsabhängige Grenzdrehzahl berechnen oder auf eine füllstandsabhängige Grenzdrehzahlkennlinie oder Grenzdrehzahlkennlinienschar, die insbesondere in der Steuervorrichtung hinterlegt ist/sind, zugreifen, wobei die Steuervorrichtung ein Schließen der Trennkupplung mittels der Trennkupplungssperreinrichtung bei Füllständen sperrt, wenn die zugehörige aktuelle Drehzahl oberhalb der zugehörigen Grenzdrehzahl oder Grenzdrehzahlkennlinie liegt. Dies hat folgende Bewandtnis: Obwohl ein Schließen der Trennkupplung aufgrund der vergleichsweise geringeren Übertragungsfähigkeit im reibenden Zustand bei befülltem Arbeitsraum des Retarders, das heißt, dass dieser ein Bremsmoment erzeugt, grundsätzlich als hinsichtlich der Haltbarkeit der Trennkupplung gefährlich angesehen wird, kann ein solches Schließen bei vergleichsweise kleinen Drehzahlen der Primärseite der Trennkupplung, das heißt bei Beschleunigen des Retarders auf vergleichsweise kleine Drehzahlen durch Schließen der Trennkupplung, zulässig sein, da nämlich das vom Retarder erzeugte Bremsmoment geschwindigkeitsabhängig ist, bezogen auf die Umlaufgeschwindigkeit des Primärrades des Retarders. Dies bedeutet zugleich, dass in Abhängigkeit der aktuellen Drehzahl auch ein schnelleres Schließen der Trennkupplung beziehungsweise ein schnelleres Aktivieren des Retarders möglich ist.

Wenn der Kraftfahrzeugantriebsstrang grundsätzlich derart ausgelegt ist, dass der Retarder beziehungsweise dessen Arbeitsraum im deaktivierten Zustand, das heißt, wenn keine Aktivierungsanforderung für den Retarder vorliegt, entleert sein soll, so stellt das Vorhandensein von Arbeitsmedium im Arbeitsraum des Retarders in diesem Zustand ein unerwünschtes Ereignis dar. Dieses Ereignis kann dazu führen, dass durch die erfindungsgemäßen Maßnahmen ein Schließen der Trennkupplung bei der nächsten Aktivierungsanforderung für den Retarder verhindert beziehungsweise gesperrt wird, somit die Verfügbarkeit des Retarders eingeschränkt wird. Um nun in einem solchen unerwünschten Zustand die Verfügbarkeit des Retarders wieder zu erhöhen, kann gemäß einer erfindungsgemäßen Ausführung vorgesehen sein, dass bei einem Sperren des Schließens der Trennkupplung Maßnahmen eingeleitet werden, die ein Entleeren des Arbeitsraums im nächstmöglichen oder günstigen Zeitpunkt bewirken sollen. So kann beispielsweise nach dem genannten Zustand des Sperrens des Schließens der Trennkupplung abgewartet werden, bis die Drehzahl der Primärseite der Trennkupplung auf einen aktuellen Wert unterhalb der Grenzdrehzahl oder der Grenzdrehzahlkennlinie absinkt und dann ein Schließen der Trennkupplung auch ohne Aktivierungsanforderung beziehungsweise Aktivierungssignal für den Retarder erfolgen, sodass der Rotor derselben (zumindest das Primärrad) in Umlauf versetzt wird und ein Leerpumpen des Arbeitsraumes bewirkt.

Gemäß dieser erfindungsgemäßen Ausführungsform kann die Steuervorrichtung einen Retarderaktivierungssignaleingang aufweisen, an welchem ein Signal anliegt, das eine Aktivierungsanforderung für den Retarder signalisiert, und die Steuervorrichtung das genannte Sperren des Schließens der Trennkupplung trotz Aktivierungsanforderung bewirken, und nach dem Sperren, sobald eine aktuelle Drehzahl unterhalb der Grenzdrehzahl oder der Grenzdrehzahllinie vorliegt, unabhängig von einer weiteren Aktivierungsanforderung beziehungsweise auch dann, wenn keine Aktivierungsanforderung vorliegt, ein Schließen der Trennkupplung ansteuern.

Gemäß einer alternativen Ausgestaltung der Erfindung kann das Entleeren des Arbeitsraums des Retarders, wenn der unerwünschte Zustand einer Befüllung festgestellt und das Schließen der Trennkupplung entsprechend gesperrt wurde, auch mittels eines anderen Aggregats, beispielsweise durch Antreiben des Primärrades und/oder des Sekundärrades des hydrodynamischen Retarders mit einem Zusatzmotor, insbesondere Elektromotor erfolgen oder der Arbeitsraum kann mittels einer Pumpe leergepumpt werden.

Die Erfindung soll nachfolgend anhand eines Ausführungsbeispiels exemplarisch beschrieben werden.

Es zeigen:
- Figur 1: eine schematische Ansicht eines Sekundärretarders, der über eine Trennkupplung am Antriebsstrang eines Kraftfahrzeugs angeschlossen ist;
- Figur 2: eine schematische Detailansicht des Retarders aus der Figur 1.

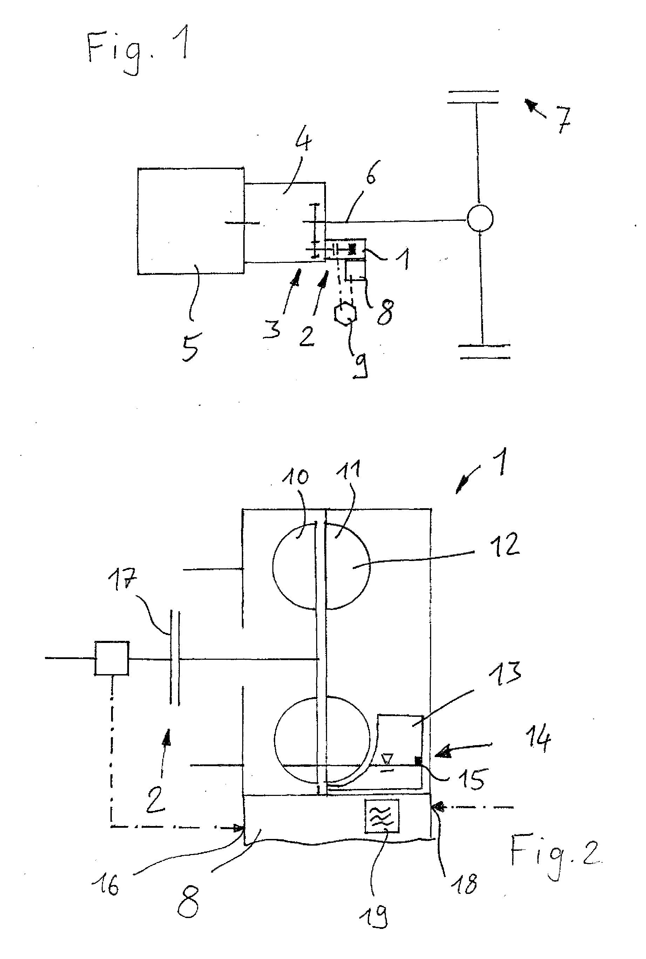

In den Figuren erkennt man den hydrodynamischen Retarder 1, der über eine Trennkupplung 2 am Kraftfahrzeugantriebsstrang 3, hier einem Nebenabtrieb 3 in Form eines Hochtriebs des Getriebes 4 angeschlossen ist. Bei dem Getriebe 4 handelt es sich um ein Stufenschaltgetriebe, insbesondere Automatgetriebe oder automatisiertes Schaltgetriebe eines Kraftfahrzeugs, das eingangsseitig vom Motor, insbesondere Verbrennungsmotor 5, angetrieben wird und ausgangsseitig über eine Getriebeabtriebswelle 6 Antriebsräder 7 des Kraftfahrzeugs antreibt. Dem Retarder 1 ist eine Steuervorrichtung 8 zugeordnet, die zumindest das Öffnen und Schließen der Trennkupplung 2 steuert oder, falls dies durch eine andere Einrichtung gesteuert wird, ein Schließen der Trennkupplung 2 sperrt. Die Steuervorrichtung 8 kann entweder die Trennkupplungssperreinrichtung selbst darstellen oder auf eine solche zugreifen, in der Figur 1 mit dem Bezugszeichen 9 bezeichnet.

In der detaillierteren Ansicht der Figur 2 ist das beschaufelte Primärrad 10 des Retarders 1 dargestellt. Dieses steht dem beschaufelten Sekundärrad 11, hier als Stator ausgeführt, gegenüber und bildet mit diesem gemeinsam den Arbeitsraum 12 aus. Ferner weist der hydrodynamische Retarder 1 einen Nebenraum 13 auf, dessen Füllstand mit Arbeitsmedium proportional zu dem des Arbeitsraumes 12 ist. Im Nebenraum 13 ist eine Füllstandsüberwachungseinrichtung 14 vorgesehen, hier mit einem Schwimmer 15.

Die Steuervorrichtung 8 weist einen Eingang 16 für die Drehzahl der Primärseite 17 der Trennkupplung 2 auf. Ferner weist die Steuervorrichtung 8 einen Retarderaktivierungssignaleingang 18 auf, an welchem ein Signal anliegt, das eine Aktivierungsanforderung für den Retarder signalisiert. Eine solche Aktivierungsanforderung kann beispielsweise durch den Fahrzeugführer durch Betätigen eines Aktuators oder Schalthebels oder durch eine Regeleinrichtung des Fahrzeugs, beispielsweise Abstandsregler oder Geschwindigkeitsregler, ausgegeben werden.

In der Steuervorrichtung 8 ist eine Kennlinie oder es sind mehrere Kennlinien einer füllstandsabhängigen Grenzdrehzahl in einem Speicher 19 hinterlegt. Alternativ oder zusätzlich kann die Steuervorrichtung 8 eine entsprechende Grenzdrehzahl stets aus aktuellen Eingangsgrößen berechnen. Eingangsgrößen können beispielsweise durch einen CAN-Bus zur Verfügung gestellt werden.

## Patentansprüche

1. Kraftfahrzeugantriebsstrang mit einem hydrodynamischen Retarder (1), umfassend ein umlaufendes beschaufeltes Primärrad (10) und ein stationäres oder in Gegenrichtung umlaufendes beschaufeltes Sekundärrad (11), die gemeinsam einen mit Arbeitsmedium zum Einschalten des Retarders (1) befüllbaren Arbeitsraum (12) ausbilden, wobei
1.1 der hydrodynamische Retarder (1) mittels einer Trennkupplung (2) mechanisch vom Antriebsstrang abkoppelbar ist, **dadurch gekennzeichnet, dass**
1.2 eine Füllstandsüberwachungseinrichtung (14) vorgesehen ist, welche den aktuellen Füllstand des Arbeitsmediums im Arbeitsraum (12) erfasst, und
1.3 eine Trennkupplungssperreinrichtung (9) vorgesehen ist, die mit der Füllstandsüberwachungseinrichtung (14) in kommunikativer oder mechanischer Wirkverbindung steht und ein Schließen der Trennkupplung (2) in Abhängigkeit des erfassten Füllstands sperrt.

2. Kraftfahrzeugantriebsstrang gemäß Anspruch 1, **dadurch gekennzeichnet, dass** die Füllstandsüberwachungseinrichtung (14) einen im Arbeitsraum (12) des Retarders (1) oder einen in einem mit dem Arbeitsraum (12) bezüglich des Füllstands mit Arbeitsmedium kommunizierenden Nebenraum (13) des Retarders angeordneten Schwimmer (15) aufweist.

3. Kraftfahrzeugantriebsstrang gemäß einem der Ansprüche 1 oder 2, **dadurch gekennzeichnet, dass** die Füllstandsüberwachungseinrichtung (14) einen elektrischen, optischen oder akustischen Sensor und eine zugeordnete Auswerteeinheit umfasst, mittels welchen der Füllstand des Arbeitsraumes (12) oder eines bezüglich des Füllstands mit Arbeitsmedium kommunizierenden Nebenraumes (13) des Retarders (1) durch elektrische Widerstandsmessung, optische Signalmessung oder akustische Signalmessung erfasst wird.

4. Kraftfahrzeugantriebsstrang gemäß einem der Ansprüche 1 bis 3, **dadurch gekennzeichnet, dass** der Füllstandsüberwachungseinrichtung (14) oder der Trennkupplungssperreinrichtung (9) eine Steuervorrichtung (8) zugeordnet oder in diese integriert ist, welche als Eingangsgröße die aktuelle Drehzahl der dem Retarder abgewandten Primärseite (17) der Trennkupplung (2) erfasst, empfängt oder berechnet und ein Schließen der Trennkupplung (2) zusätzlich in Abhängigkeit der Drehzahl steuert.

5. Kraftfahrzeugantriebsstrang gemäß Anspruch 4, **dadurch gekennzeichnet, dass** die Steuervorrichtung (8) eine füllstandsabhängige Grenzdrehzahl berechnet oder eine füllstandsabhängige Grenzdrehzahlkennlinie in der Steuervorrichtung (8) hinterlegt ist und die Steuervorrichtung (8) ein Schließen der Trennkupplung (2) mittels der Trennkupplungssperreinrichtung (9) bei Füllständen sperrt, wenn die zugehörige aktuelle Drehzahl oberhalb der zugehörigen Grenzdrehzahl oder der Grenzdrehzahlkennlinie liegt.

6. Kraftfahrzeugantriebsstrang gemäß Anspruch 5, **dadurch gekennzeichnet, dass** die Steuervorrichtung (8) einen Retarderaktivierungssignaleingang (18) aufweist, an welchem ein Signal anliegt, das eine Aktivierungsanforderung für den Retarder (1) signalisiert, und die Steuervorrichtung (8) das genannte Sperren des Schließens der Trennkupplung (2) trotz Aktivierungsanforderung bewirkt, und nach dem Sperren, sobald eine aktuelle Drehzahl unterhalb der Grenzdrehzahl oder der Grenzdrehzahlkennlinie vorliegt, unabhängig von einer weiteren Aktivierungsanforderung ein Schließen der Trennkupplung (2) ansteuert.

7. Verfahren zum Steuern eines Kraftfahrzeugantriebsstranges mit einem mit Arbeitsmedium befüll- und entleerbaren hydrodynamischen Retarder (1), der mittels einer Trennkupplung (2) mechanisch vom Antriebsstrang abkoppelbar ist, mit den folgenden Schritten:
7.1 wenn im geöffneten Zustand der Trennkupplung (2) ein Signal einer Aktivierungsanforderung für den Retarder (1) empfangen wird,
7.2 Erfassen des Füllstands des Arbeitsmediums in einem durch ein beschaufeltes Primärrad (10) und ein beschaufeltes Sekundärrad (11) gebildeten Arbeitsraumes (12) des Retarders (1), und
7.3 Schließen der Trennkupplung (2) in Abhängigkeit des erfassten Füllstands.

8. Verfahren gemäß Anspruch 7, **dadurch gekennzeichnet, dass** das Schließen der Trennkupplung (2) nur bei vom Arbeitsmedium entleerten Zustand des Arbeitsraumes (12) erfolgt.

9. Verfahren gemäß Anspruch 7, **dadurch gekennzeichnet, dass** das Schließen der Trennkupplung (2) in Abhängigkeit des Füllstands und der aktuellen Drehzahl einer dem Retarder (1) abgewandten Primärseite (17) der Trennkupplung (2) erfolgt, wobei bei vergleichsweise kleineren Drehzahlen ein Schließen auch mit mit Arbeitsmedium befülltem Arbeitsraum (12) erfolgt und bei vergleichsweise größeren Drehzahlen ein Schließen nur bei entleertem Arbeitsraum (12) erfolgt.

10. Verfahren gemäß Anspruch 9, **dadurch gekennzeichnet, dass** eine Grenzdrehzahl oder Grenzdrehzahlkennlinie vorgegeben wird, mittels welcher ein oder mehrere maximal zulässige Füllstände einer Drehzahl oder verschiedenen Drehzahlen der Primärseite (17) der Trennkupplung (2) zugeordnet werden, und ein Schließen der Trennkupplung (2) bei der aktuellen Drehzahl der Primärseite (17) der Trennkupplung (2) oberhalb der Grenzdrehzahl oder Grenzdrehzahlkennlinien gesperrt und unterhalb hiervon zugelassen wird.

11. Verfahren gemäß Anspruch 10, **dadurch gekennzeichnet, dass** nach dem Sperren des Schließens der Trennkupplung (2) abgewartet wird, bis die Drehzahl der Primärseite (17) der Trennkupplung (2) auf einen aktuellen Wert unterhalb der Grenzdrehzahl oder Grenzdrehzahlkennlinie absinkt und dann ein Schließen der Trennkupplung (2) auch ohne Aktivierungsanforderung für den Retarder (1) erfolgt, um den Retarder (1) zu entleeren.

## Claims

1. Motor vehicle drive train having a hydrodynamic retarder (1), comprising a rotating bladed primary wheel (10) and a bladed secondary wheel (11) which is stationary or rotating in opposite direction, which form together a working chamber (12) which can be filled with working medium to switch on the retarder (1), whereas
1.1 the hydrodynamic retarder (1) can be disengaged mechanically from the drive train by means of a separating clutch (2), **characterised in that**
1.2 a filling level monitoring device (14) is provided, which detects the current filling level of the working medium in the working chamber (12) and
1.3 a separating clutch blocking device (9) is provided, which is in communicating or mechanical operative connection with the filling level monitoring device (14) and blocks the closing of the separating clutch (2) according to the filling level detected.

2. Motor vehicle drive train according to claim 1, **characterised in** the filling level monitoring device (14) has a floater arranged in the working chamber of the retarder (1) or a floater arranged in an auxiliary chamber communicating with the working chamber (12) according to the filling level of working medium.

3. Motor vehicle drive train according to one of the claims 1 or 2, **characterised in that** the filling level monitoring device (14) includes an electric, optical or acoustic sensor and an associated interpreting unit, by means of which the filling level of the working chamber (12) or of an auxiliary chamber (13) of the retarder (1) communicating with working chamber (12) according to the filling level is detected by an electric resistance measurement, an optic signal measurement or an acoustic signal measurement.

4. Motor vehicle drive train according to one of the claims 1 to 3, **characterised in**
**that** a control device (8) is associated to or integrated in the filling level monitoring device (14) or the separating clutch blocking device (9), which detects, receives or calculates as an input variable the current rotational speed of the primary side (17), of the separating clutch (2), side facing away from the retarder and additionally controls the closing of the separating clutch (2) as a function of the rotational speed.

5. Motor vehicle drive train according to claim 4, **characterised in that** the control device (8) calculates a limit rotational speed related to the filling level or a limit rotational speed line related to the filling level is stored in the control device (8) and the control device (8) blocks the closing of the separating clutch (2) by means of the separating clutch blocking device (9) in case of filling levels, when the corresponding current rotational speed lies above the corresponding limit rotational speed or characteristic limit rotational speed line.

6. Motor vehicle drive train according to claim 5, **characterised in that** the control device (8) has a retarder activation signal input (18) to which a signal is applied, which signals an activation request for the retarder (1) and the control device (8) causes the mentioned blocking of the closing of the separating clutch (2) in spite of activation request, and after the locking, as soon as a current rotational speed lies below the limit rotational speed or the characteristic limit rotational speed line, initiates the closing of the separating clutch (2) independent of another activation request.

7. Method for controlling a motor vehicle drive train having a hydrodynamic retarder (1) which can be filled and emptied with working medium, which can be disengaged mechanically from the drive train by means of a separating clutch (2), with the following steps:
7.1 when a signal of an activation request for the retarder (1) is received when the separating clutch (2) is opened,
7.2 detection of the filling level of the working medium in a working chamber (12) of the retarder (1), which working chamber (12) is formed by a bladed primary wheel (10) and a bladed secondary wheel (11), and
7.3 blocking the closing of the separating clutch (2) according to the filling level detected.

8. Method according to claim 7, **characterised in that** that the separating clutch (2) is only closed when the working chamber (12) has been emptied of working medium.

9. Method according to claim 7, **characterised in that** the separating clutch (2) is closed according to the filling level and to the current rotational speed of a primary side (17) of the separating clutch (2), which primary side (17) facing away from the retarder (1), whereby a closing takes place in the presence of comparatively small rotation speeds also with a working chamber (12) filled with working medium and a closing takes place in the presence of comparatively larger rotational speeds only with an emptied working chamber (12).

10. Method according to claim 9, **characterised in that** a limit rotational speed or a characteristic limit rotation speed line is provided, by means of which one or several maximal admissible filling levels are associated to a rotational speed or different rotational speeds of the primary side (17) of the separating clutch (2) and the closing of the separating clutch (2) is blocked when the current rotational speed (17) of the primary side (2) is above the limit rotational speed or the characteristic limit rotational speed lines and said closing is admitted below said values.

11. Method according to claim 10, **characterised in that** the system waits after the blocking of the closing of the separating clutch (2) until the rotational speed of the primary side (17) of the separating clutch (2) falls to a current value below the limit rotational speed or characteristic limit rotational speed line and then the separating clutch (2) is closed also without activation request for the retarder (1), to empty the retarder (1).

## Revendications

1. Train d'entraînement de véhicule automobile avec retardateur hydrodynamique (1), comportant une roue à aubes rotative (10) et une roue secondaire à aubes (11) stationnaire ou tournant en sens inverse, constituant ensemble une chambre de travail (12) pouvant être remplie d'un fluide de travail pour solliciter le retardateur (1), où
1.1 le retardateur hydrodynamique (1) peut être déconnecté du train d'entraînement mécaniquement à l'aide d'un embrayage de séparation (2), caractérisé en ce
1.2 qu'un dispositif de surveillance de niveau de remplissage (14) est prévu pour détecter le niveau de remplissage courant du fluide de travail dans la chambre de travail (12) et
1.3 qu'un dispositif de blocage d'embrayage de séparation (9) est prévu, qui est en liaison opérationnelle communicative ou mécanique avec le dispositif de surveillance de niveau de remplissage (14) et bloque toute fermeture de l'embrayage de séparation (2) en fonction du niveau de remplissage détecté.

2. Train d'entraînement de véhicule automobile selon la revendication 1, **caractérisé en ce que** le dispositif de surveillance de niveau de remplissage (14) comporte un flotteur (15) disposé dans la chambre de travail (12) du retardateur (1) ou bien un flotteur (15) disposé dans une chambre auxiliaire (13) du retardateur communiquant avec la chambre de travail (12) en fonction du niveau de remplissage en fluide de travail.

3. Train d'entraînement de véhicule automobile selon l'une des revendications 1 ou 2, **caractérisé en ce que** le dispositif de surveillance de niveau de remplissage (14) comporte un capteur électrique, optique ou acoustique et une unité d'interprétation associée, à l'aide desquels on détecte le niveau de remplissage de la chambre de travail (12) ou bien d'une chambre auxiliaire (13) du retardateur (1) communicante en fonction du niveau de remplissage en fluide de travail, en mesurant la résistance électrique, le signal optique ou le signal acoustique.

4. Train d'entraînement de véhicule automobile selon l'une des revendications 1 à 3, **caractérisé en ce qu'**un dispositif de commande (8) est associé ou intégré au dispositif de surveillance de niveau de remplissage (14) ou bien au dispositif de blocage d'embrayage de séparation (9), qui détecte, reçoit ou calcule comme paramètre de départ la vitesse de rotation actuelle du côté primaire (17) de l'embrayage de séparation (2) tournant le dos au retardateur et commande la fermeture de l'embrayage de séparation (2) en outre en fonction de la vitesse de rotation.

5. Train d'entraînement de véhicule automobile selon la revendication 4, **caractérisé en ce que** le dispositif de commande (8) calcule une vitesse de rotation limite liée au niveau de remplissage ou bien qu'une courbe caractéristique de vitesse de rotation limite liée au niveau de remplissage est stockée dans le dispositif de commande (8) et le dispositif de commande (8) bloque la fermeture de l'embrayage de séparation (2) à l'aide du dispositif de blocage d'embrayage de séparation (9) en cas de niveaux de remplissage tels que la vitesse de rotation actuelle correspondante est supérieure à la vitesse de rotation limite correspondante ou bien à la courbe caractéristique de vitesse de rotation limite.

6. Train d'entraînement de véhicule automobile selon la revendication 5, **caractérisé en ce que** le dispositif de commande (8) présente une entrée de signal d'activation de retardateur (18), entrée à laquelle un signal est appliqué pour signaler une demande d'activation pour le retardateur (1), et le dispositif de commande (3) induit le blocage en question de la fermeture de l'embrayage de séparation (2) malgré la demande d'activation et une fois le blocage effectué, dès que la vitesse de rotation actuelle est inférieure à la vitesse de rotation limite ou bien à la courbe caractéristique de vitesse de rotation limite, sollicite la fermeture de l'embrayage de séparation (2) en fonction d'une demande d'activation ultérieure.

7. Procédé de commande d'un train d'entraînement de véhicule automobile comportant un retardateur hydrodynamique (1) que l'on peut remplir et vidé de fluide de travail, qui peut être déconnecté mécaniquement du train d'entraînement au moyen d'un embrayage de séparation (2), comprenant les étapes suivantes :
7.1 réception d'un signal de demande d'activation pour le retardateur (1) lorsque l'embrayage de séparation (2) est en position ouverte,
7.2 détection du niveau de remplissage du fluide de travail dans une chambre de travail (12) du retardateur (1) constitué d'une roue primaire à aubes (10) et d'une roue secondaire à aubes, et
7.3 Fermeture de l'embrayage de séparation (2) en fonction du niveau de remplissage détecté.

8. Procédé selon la revendication 7, **caractérisé en ce que** l'embrayage de séparation (2) ne se ferme que si la chambre de travail (12) est vidée de tout fluide de travail.

9. Procédé selon la revendication 7, **caractérisé en ce que** la fermeture de l'embrayage de séparation (2) est fonction du niveau de remplissage et de la vitesse de rotation actuelle d'un côté primaire (17) de l'embrayage de séparation (2) tournant le dos au retardateur (1). tandis que la fermeture s'opère à des vitesses de rotation comparativement plus petites, même si la chambre de travail (12) est remplie de fluide de travail et que la fermeture s'opère à des vitesses de rotation comparativement plus grandes seulement si la chambre de travail (12) est vidée.

10. Procédé selon la revendication 9, **caractérisé en ce qu'**une vitesse de rotation limite ou bien une courbe caractéristique de vitesse de rotation limite est spécifiée, à l'aide desquelles un ou plusieurs niveaux de remplissage maximaux admissibles sont associés à une vitesse de rotation ou des vitesses de rotation différentes du côté primaire (17) de l'embrayage de séparation (2), et que la fermeture de l'embrayage de séparation (2) est bloquée lorsque la vitesse de rotation actuelle du côté primaire (17) de l'embrayage de séparation (2) est supérieure à la vitesse de rotation limite ou aux courbes caractéristiques de vitesse de rotation limite et est autorisée au-dessous de ces valeurs.

11. Procédé selon la revendication 10, **caractérisé en ce qu'**une fois le blocage de la fermeture de l'embrayage de séparation (2) effectué, le système attend que la vitesse de rotation du côté primaire (17) de l'embrayage de séparation (2) retombe à une valeur actuelle inférieure à la vitesse de rotation limite ou la courbe caractéristique de vitesse de rotation limite avant de pouvoir fermer l'embrayage de séparation (2) même sans demande d'activation pour le retardateur (1) afin de vider le retardateur (1).
